# EUROPEAN PATENT APPLICATION

(11) **EP 2 960 446 A1**
(43) Date of publication of application: **30.12.2015**
(21) Application number: 14305988.9
(22) Date of filing: 24.06.2014
(51) Int. Cl.: F01L 1/14, F01L 1/18, F01M 9/10, F02M 59/10

(54) **Mechanical system forming a cam follower or a rocker arm**

(71) Applicant: Aktiebolaget SKF, 415 50 Göteborg (SE)
(72) Inventor: Hauvespre, Benoît, 37390 METTRAY (FR); Maffucci, Julien, 37230 PERNAY (FR)
(74) Representative: Myon, Gérard Jean-Pierre

(57) **Abstract**

The invention relates to a mechanical system (1), forming a cam follower or a rocker arm, the mechanical system (1) comprising: a support element; a pin (30) extending between two opposite ends (35, 36) along a first axis (X1) and supported by the support element; and a roller (40) movable in rotation relative to the pin (30) around the first axis (X1) and adapted to roll on a cam. According to the invention, the pin (30) and/or the roller (40) is provided with at least one recess (38) forming a lubricant reservoir at an interface (60) between the pin (30) and the roller (40). The invention also relates to an injection pump or a valve actuator comprising such a mechanical system (1) and a method for manufacturing such a mechanical system (1).

## Description

### TECHNICAL FIELD OF THE INVENTION

The invention concerns a mechanical system, forming a cam follower or a rocker arm, and comprising a pin or a roller provided with at least one recess forming a lubricant reservoir. The invention also concerns an injection pump or a valve actuator comprising such a mechanical system. The invention also concerns a method for manufacturing such a mechanical system.

### BACKGROUND OF THE INVENTION

Classically, a cam follower comprises at least a tappet, a pin and a roller. The tappet extends along a longitudinal axis, while the pin and the roller are centered on a transverse axis. The tappet is formed with two lateral flanges, delimiting an intermediate gap between them and each comprising a cylindrical bore. The roller is positioned in the intermediate gap, between both flanges and bores. The pin is fitted in the two bores, such that the roller is movable in rotation relative to the pin around its axis. The pin may be caulked, in other words plastically deformed, on both opposite ends to create a mechanical connection by press-fit in the tappet bores.

When the cam follower is in service, the roller collaborates with a cam synchronized with the internal combustion engine camshaft. The rotation of the camshaft leads to a periodic displacement of a piston of the pump that rests against the tappet, to allow fuel to be delivered. The tappet is movable back and forth along the longitudinal axis, while the roller is movable in rotation around its central axis.

As shown by example in EP-A-2 607 636, it is known to provide the tappet with lubrication channels. Depending on the configuration and orientation of the cam follower, the oil lubricant flows freely or is projected via these channels toward the roller and the pin. When the roller is positioned downwards relative to the tappet, the lubrication can be achieved simply by gravity. By example, the lubricant used for the cam follower may be the oil used for the internal combustion engine for a motor vehicle. When the roller is positioned upwards relative to the tappet, the lubrication can be achieved by a pump and a pressurized jet, or any other suitable means. In all cases, a lubrication circuit is formed through the cam follower and its surroundings to ensure proper lubricating of all required areas, including the interface between the pin and the roller

### SUMMARY OF THE INVENTION

The aim of the invention is to provide an improved mechanical system.

To this end, the invention concerns a mechanical system, forming a cam follower or a rocker arm, the mechanical system comprising: a support element; a pin extending between two opposite ends along a first axis and supported by the support element; and a roller movable in rotation relative to the pin around the first axis and adapted to roll on a cam. According to the invention, the pin and/or the roller is provided with at least one recess forming a lubricant reservoir at an interface between the pin and the roller.

Thanks to the invention, the lubrication at the interface between pin and roller is improved, the friction between pin and roller is reduced and over-heating inside the mechanical system is prevented. One or several lubricant reservoirs can be integrated to the pin and/or the roller, close to the surfaces to be lubricated. The lubricant can be oil or preferably grease, available directly at the interface, without having a long lubrication circuit to run through. The lubricant is available in a predetermined quantity and for a suitable operation time. The need for circulating oil through the mechanical system is reduced, so that either the lubrication pump may be left out, or the size of the pump and the quantity of oil that it contains may be reduced.

According to further aspects of the invention which are advantageous but not compulsory, such a mechanical system may incorporate one or several of the following features:
- The pin is provided with at least one recess forming a lubricant reservoir and shaped as an elongated groove extending in a direction parallel to the first axis.
- The at least one recess forming a lubricant reservoir extends partly along the pin in a direction parallel to the first axis.
- The roller is provided with at least one recess forming a lubricant reservoir and shaped as an annular groove centered on the first axis.
- The pin is provided with at least two recesses forming lubricant reservoirs.
- The recesses forming lubricant reservoirs are regularly distributed around the first axis.
- The roller is provided with at least two recesses forming lubricant reservoirs.
- The recesses forming lubricant reservoirs are regularly distributed along the first axis.
- The pin and the roller are each provided with at least one recess forming a lubricant reservoir.
- The lubricant contained in the at least one recess is a grease.
- The support element is provided with at least one lubrication channel for lubricating the interface between the pin and the roller, in particular once the lubricant contained in the at least one recess is spent.
- The mechanical system comprises a rolling bearing, a sliding bearing or a bushing positioned at the interface between the pin and the roller element.
- The mechanical system forms a cam follower, wherein the support element is a tappet movable in translation along a second axis perpendicular to the first axis.
- The mechanical system forms a rocker arm, wherein the support element is an arm movable in rotation along a pivot axis parallel to the first axis.

The invention also concerns an injection pump for a motor vehicle, comprising a mechanical system as mentioned here-above.

The invention also concerns a valve actuator for a motor vehicle, comprising a mechanical system as mentioned here-above.

The invention also concerns a method for manufacturing a mechanical system as mentioned here-above. The method comprises the following steps:
a) forming at least one recess in the pin and/or the roller ;
b) filling the recess with a predetermined amount of lubricant; and
c) mounting the pin and the roller together with the support element.

### BRIEF DESCRIPTION OF THE DRAWINGS

The invention will now be explained in correspondence with the annexed figures, as an illustrative example, without restricting the object of the invention. In the annexed figures:
- Figure 1 is a perspective view of a mechanical system according to the invention, of the cam follower type, comprising a tappet, a pin and a roller;
- Figure 2 is a sectional view along plane II of figure 1;
- Figure 3 is a sectional view along plane III of figure 1;
- Figure 4 is a partial sectional view, at a larger scale, of detail IV in figure 2;
- Figure 5 is a partial sectional view, at a larger scale, of detail V in figure 3;
- Figures 6 and 7 are partial sectional views, similar to figure 4 and 5 respectively, of a cam follower according to a second embodiment of the invention;
- Figure 8 is a partial sectional view, similar to figure 4, of a cam follower according to a third embodiment of the invention;
- Figure 9 is a partial sectional view, similar to figure 5, of a cam follower according to a fourth embodiment of the invention;
- Figure 10 is a partial sectional view, similar to figure 4, of a cam follower according to a fifth embodiment of the invention; and
- Figure 11 is a partial sectional view, similar to figure 5, of a cam follower according to a sixth embodiment of the invention.

### DETAILED DESCRIPTION OF SOME EMBODIMENTS

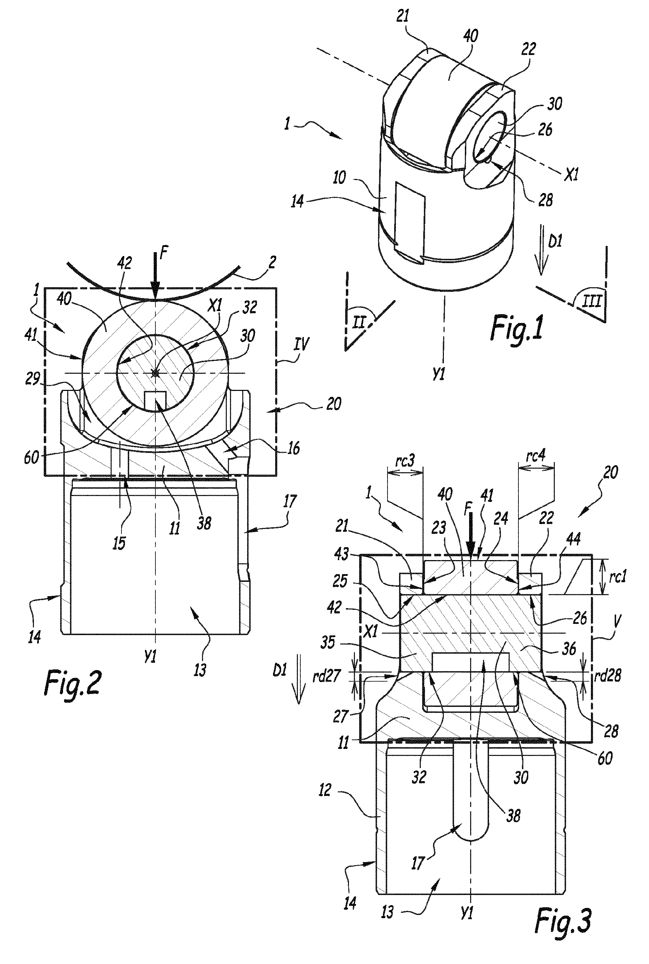

The mechanical system 1 represented on figures 1 to 5 is of the cam follower type, adapted to equip an injection pump for a motor vehicle, not shown.

System 1 comprises a tappet 10, a pin 30 and a roller 40, together forming a plain bearing. In heavy duty applications such as in diesel truck engines, there is a lack of space for the implementation of a rolling bearing, thus justifying the use of a plain bearing. Pin 30 and roller 40 are centered on a transverse axis X1, while tappet 10 is centered on a longitudinal axis Y1. Axes X1 and Y1 are perpendicular. Roller 40 is adapted to roll on a cam 2, shown on figure 2.

Tappet 10 comprises a central portion 11 interposed between a cylindrical portion 12 and a bearing portion 20. Portion 12 is centered on axis Y1 and delimits a cavity 13 inside tappet 10. This cavity 13 is adapted to receive a shaft or plunger, not shown, for moving tappet 10 along axis Y1. Tappet 10 has a cylindrical outer surface 14, with a circular basis, centered on axis Y1 and extending along portions 11, 12 and partly portion 20. Tappet 10 is movable back and forth along axis Y1, in a non-represented bore belonging to the injection pump, with surface 14 sliding in this bore. Tappet 10 can be made of synthetic material, by example polyamide 6,6 (PA) or polyether-ether-ketone (PEEK), or made of metal, by example steel. Material of the tappet 10 is chosen resistant to oil flow and temperature variations.

Furthermore, tappet 10 forms a support element for pin 30 and roller 40. Specifically, bearing portion 20 of tappet 10 is adapted to receive pin 30, on which roller 40 is mounted. To this end, bearing portion 20 comprises two lateral flanges 21 and 22 extending from central portion 11 parallel to axis Y1 in a bifurcated manner, on both side of axis Y1. The flanges 21 and 22 delimit an intermediate gap 29 between them, with a concave bottom formed on the central portion 11. Each lateral flange 21 and 22 includes a cylindrical bore, respectively 25 and 26. Both bores 25 and 26 have the same diameter and extends through flanges 21 and 22 along axis X1. Flanges 21 and 22 have inner plane faces, respectively 23 and 24, facing gap 29. Preferably, bores 25 and 26 have outer and inner chamfers formed around axis X1, to facilitate the insertion of pin 30 in bores 25 and 26.

Tappet 10 also comprises several holes and bores 15, 16 and 17, provided for lubrication or other functions that are not subjects of the present invention. Due to the positions of holes 13, 15, 16, 17 and 29, central portion 11 is the thickest and most resistant portion of tappet 10.

Roller 40 has an outer cylindrical surface 41 and an inner cylindrical bore 42, which extend between two lateral faces 43 and 44. Roller element 40 is positioned in mechanical system 1 before pin 30. More precisely, roller 40 is positioned in the intermediate gap 29, between the two flanges 21 and 22 and the two bores 25 and 26 along axis X1.

Pin 30 comprises a cylindrical surface 32 extending between two pin ends 35 and 36. When pin 30 is inserted in bores 25 and 26 of tappet 10, surface 32 is adjusted with bore 42 of roller 40, such that roller 40 is movable in rotation relative to pin 30 around axis X1. Both pin and roller axes merge with axis X1.

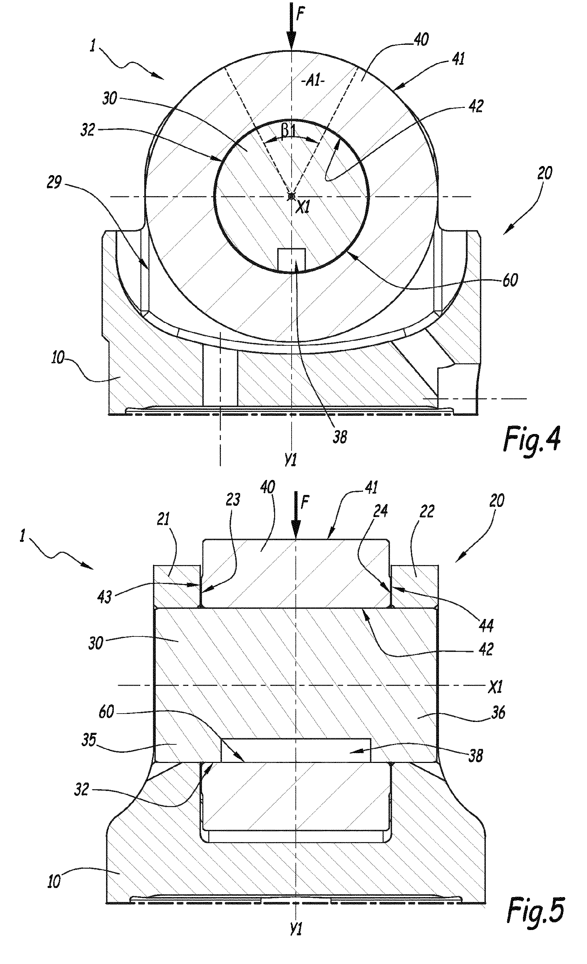

Roller 40 is adapted to roll, more precisely surface 41 can roll, on the outer surface of cam 2. When cam 2 and roller 40 are cooperating, a force F is applied on surface 42 along axis Y1. As shown on figure 4, a loading area A1 is defined near the application point of force F on surface 42, as being comprised within an angle β1 of 60 degrees centered on axis Y1. In other words, the angle β1 is open at ± 30 degrees relative to axis Y1, in a transversal plane which includes axis Y1 and is perpendicular to axis X1.

During assembly of system 1, a radial clearance rc1 may be present between the surface 32 of pin 30 and the inner surface of each bore 25 and 26, radially to axis X1. Existence and value of clearance rc1 depends on manufacturing tolerances of pin 30, as bores 25 and 26. Preferably, clearance rc1 is as small as possible before the caulking step and is further reduced by this caulking step.

As described in EP-A-2 607 636, pin ends 35 and 36 can be caulked by press-fit, respectively in bores 25 and 26. To this end, each bore 25 and 26 is provided with a radial recess, respectively 27 and 28, which extends from the bore 25 or 26 along a radial direction D1 relative to the axis X1. During the caulking step, the flow of plastically deformed material of pin 30 goes into these recesses 27-28. In other words, each radial recess 27 and 28 is adapted to receive a plastically deformed radial portion, respectively 37 or 38, of the caulked ends 35 and 36 of the pin 30. Thus, an efficient and resistant mechanical connection is provided between tappet 10 and pin 30.

As shown on figure 3, a clearance rc3 may be present between faces 23 and 43, while a clearance rc4 may be present between faces 24 and 44, in a direction parallel to axis X1. When surface 41 rolls on cam 2, roller 40 is likely to be shifted along axis X1. In this case, clearance rc3 increases while clearance rc4 decreases, or clearance rc3 decreases while clearance rc4 increases. In other words, when roller 40 moves in rotation around axis X1, faces 23 and 43 are likely to slide against each other, or faces 24 and 44 are likely to slide against each other, with friction therebetween. Thus, the roughness of faces 43 and 44 is likely to affect, on the one hand, the friction at the interface between tappet 10 and roller 40 and, on the other hand, the flow of lubricant leaking away from this interface by centrifugal effect.

In practice, several areas within system 1 have to be lubricated to ensure proper operation of system 1, including an interface 60 between pin 30 and 40. The surfaces to be lubricated include inner surface 42 of roller 40 and outer surface 32 of pin 30, together with lateral surfaces 43 and 44 of roller 40 and lateral surfaces 23 and 24 of flanges 21 and 22.

In most of known cam followers, the lubricant has a long lubrication circuit to run through. Moreover, surfaces 23, 24, 32, 42, 43 and 44 are usually difficult to access. If these surfaces are not properly lubricated, friction between flanges 21 and 22, pin 30 and tappet 40 may bring on over-heating of system 1.

According to the invention, in the embodiment of figures 1 to 5, pin 30 is provided with a recess 38 containing lubricant. Recess 38 is an elongated groove extending in a direction parallel to axis X1. Recess 38 is open at outer surface 32, and therefore at interface 60. Recess 38 is preferably formed opposite loading area A1, near portion 11 of tappet 10.

During operation of system 1, the lubricant migrates progressively from recess 38 to the surfaces to be lubricated, i.e. surfaces 32 and 42, then surfaces 23, 24, 43 and 44. Thus, lubrication is improved, friction is reduced and over-heating is prevented.

System 1 can be manufactured according to the following steps a), b) and c). In a first step a), recess 38 is formed in pin 30, in particular by machining. In a second step b), recess 38 is filled with a predetermined amount of lubricant. In a third step c), pin 30 and roller 40 are mounted on tappet 10, with recess 38 forming a lubricant reservoir close to the surfaces to be lubricated.

As an example, pin 30 has a length of 40 millimeters, while recess 38 has a length of 20 millimeters, in a direction parallel to axis X1. Moreover, recess 38 has a width of 4 millimeters along a direction perpendicular to axes X1 and Y1, and a depth of 3 millimeters along a direction parallel to axis Y1.

Alternatively, pin 30 may be provided with one or several recesses having different shapes, positions and/or dimensions. By example, pin 30 may be provided with several elongated grooves distributed around axis X1 and each extending in a direction parallel to axis X1. According to another example, roller 40 may be provided with several holes instead of grooves. Preferably, no recess is arranged in the loading area A1 shown on figure 4.

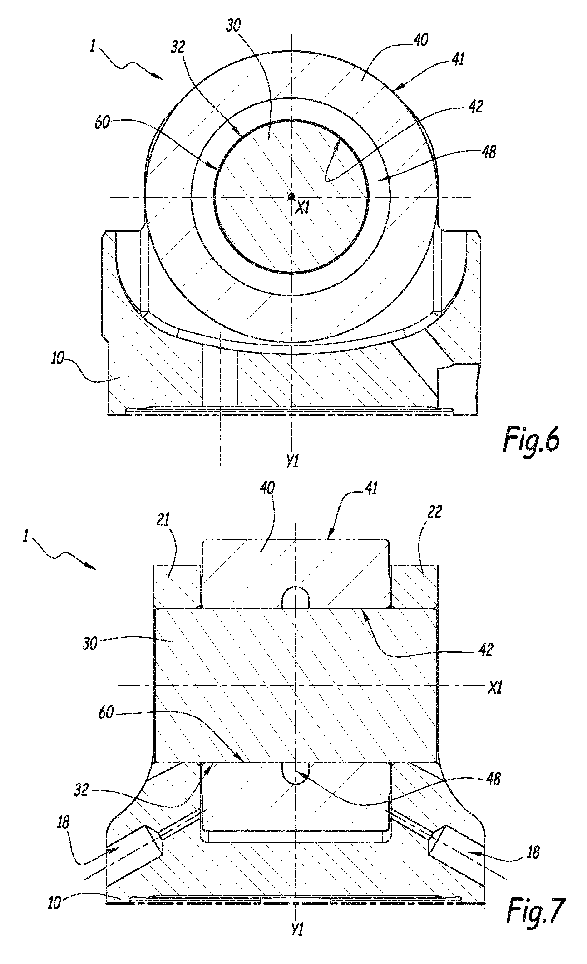

Figures 6 to 11 show other embodiments a mechanical system 1 according to the invention. In these embodiments, elements similar to the first embodiment of figures 1 to 5 have the same references and work in the same way. Only the differences with respect to the first embodiment are described hereafter.

Figures 6 and 7 show a mechanical system 1 having a recess 48 provided on roller 40 instead of a recess 38 provided on pin 30. Recess 48 is an annular groove centered on axis X1 and extending at an angle of 360 degrees around axis X1. Recess 48 is open at inner surface 42, and therefore at interface 60.

Alternatively, roller 40 may be provided with one or several recesses having different shapes, positions and/or dimensions. By example, roller 40 may be provided with several grooves forming portions of circles around axis X1. According to a particular example, roller 40 may comprise two, three or four grooves, aligned along axis X1 and each extending at an angle of 40 to 120 degrees around X1. According to another example, roller 40 may comprise several grooves distributed along axis X1. According to another example, roller 40 may be provided with one or several recesses open at lateral surface 43 or 44, in addition to be open at surface 42. According to another example, roller 40 may be provided with several holes instead of grooves. Preferably, no recess is arranged in the loading area A1.

Furthermore, optional lubrication channels 18 are formed in tappet 10. Those channels 18 allow guiding a flow of lubricant up to interface 60, in particular once the lubricant contained in recess 48 has been spent. System 1 may be provided with one several lubrication channels having any suitable shape, positions and/or dimensions.

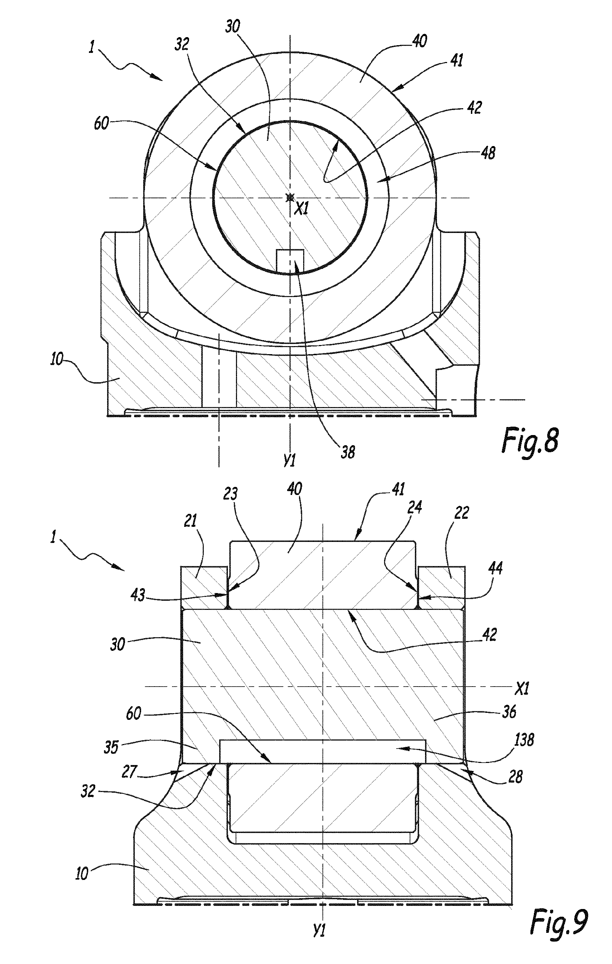

Figure 8 shows a mechanical system 1 having a recess 38 provided on pin 30 and a recess 48 provided on roller 40. Recess 38 is similar to the one of figures 4 and 5, while recess 48 is similar to the one of figures 6 and 7. Alternatively, pin 30 and roller 40 may be provided with recesses having different shapes, positions and/or dimensions.

Figure 9 shows a mechanical system 1 having a recess 138 provided on pin 30. Recess 138 is longer than recess 38 in a direction parallel to axis X1. However, recess 138 does not extend along the whole length of pin 30, otherwise pin 30 would be weakened and lubricant leakage would occur near pin ends 35 and 36. In other words, recess 138 extends partly along pin 30 in a direction parallel to axis X1. On the example of figure 9, recess 138 extends up to flanges 21 and 22 in a direction parallel to axis X1, but not up to recesses 27 and 28. Whatever the dimensions of pin 30, at least 1 millimeter without recess 138 is preferably kept at each end 35 and 36.

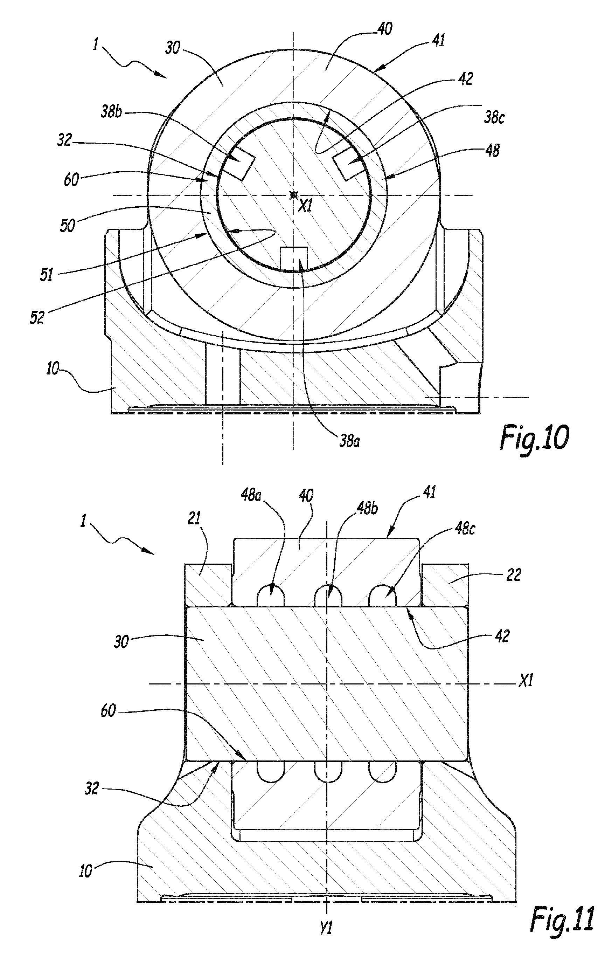

Figure 10 shows a mechanical system 1 having three recesses 38a, 38b and 38c provided on pin 30 and regularly distributed around axis X1. Each recess 38a, 38b and 38c has a shape similar to recess 38, so they can contain three times more lubricant than recess 38 alone.

Besides, an optional bushing 50 is located at the interface 60 between pin 30 and roller 40. Preferably, no recess forming a lubricant reservoir is provided on bushing 50. Bushing 50 has an outer cylindrical surface 51 and an inner cylindrical bore 52. During assembly of system 1, surface 51 of bush 50 is adjusted with bore 42 of roller 40, while surface 31 of pin 30 is adjusted with bore 52 of bush 50, such that roller 40 is movable in rotation relative to pin 30 around axis Y10. Tappet 20 supports pin 30, which supports bush 50, which supports roller 40. Pin, roller and bush axes merge with axis Y10.

Figure 11 shows a mechanical system 1 having three recesses 48a, 48b and 48c provided on roller 40 and regularly distributed along axis X1. Each recess 48a, 48b and 48c has a shape similar to recess 48, so they can contain three times more lubricant than recess 48 alone.

Other non-show embodiments can be implemented within the scope of the invention. For example, support element 10 may have a different configuration depending on the intended application of system 1.

Moreover, the mechanical system 1 according to the invention is not limited to a cam follower. For example, system 1 may form a rocker arm, wherein the support element 10 is an arm movable in rotation along a pivot axis parallel to axis X1.

Whatever the embodiment, pin 30 and/or roller 40 is provided with at least one recess 38, 48, 138, 38a, 38b, 38c, 48a, 48b, 48c for containing lubricant, which is formed at the interface 60 between pin 30 and roller 40.

According to another non-shown embodiment, radial recesses 27 and 28 may have different shapes, positions and/or dimensions, as described in EP-A-2 607 636.

According to another non-shown embodiment, system 1 may comprise a rolling or sliding bearing, with bearing elements positioned at the interface 60 between pin 30 and roller 40.

In addition, technical features of the different embodiments can be, in whole or part, combined with each other. Thus, the mechanical system 1 can be adapted to the specific requirements of the application.

## Claims

1. A mechanical system (1), forming a cam follower or a rocker arm, the mechanical system (1) comprising:
- a support element (10);
- a pin (30) extending between two opposite ends (35, 36) along a first axis (X1) and supported by the support element (10); and
- a roller (40) movable in rotation relative to the pin (30) around the first axis (X1) and adapted to roll on a cam (2);
wherein the pin (30) and/or the roller (40) is provided with at least one recess (38; 48; 38, 48; 138; 38a, 38b, 38c; 48a, 48b, 48c) forming a lubricant reservoir at an interface (60) between the pin (30) and the roller (40).

2. The mechanical system (1) according to claim 1, wherein the pin (30) is provided with at least one recess (38; 138; 38a, 38b, 38c) forming a lubricant reservoir and shaped as an elongated groove extending in a direction parallel to the first axis (X1).

3. The mechanical system (1) according to claim 2, wherein the at least one recess (38; 138; 38a, 38b, 38c) forming a lubricant reservoir extends partly along the pin (30) in a direction parallel to the first axis (X1).

4. The mechanical system (1) according to one of the previous claims, wherein the roller (40) is provided with at least one recess (48; 48a, 48b, 48c) forming a lubricant reservoir and shaped as an annular groove centered on the first axis (X1).

5. The mechanical system (1) according to one of the previous claims, wherein the pin (30) is provided with at least two recesses (38a, 38b, 38c) forming lubricant reservoirs.

6. The mechanical system (1) according to claim 5, wherein the recesses (38a, 38b, 38c) forming lubricant reservoirs are regularly distributed around the first axis (X1).

7. The mechanical system (1) according to one of the previous claims, wherein the roller (40) is provided with at least two recesses (48a, 48b, 48c) forming lubricant reservoirs.

8. The mechanical system (1) according to claim 7, wherein the recesses (48a, 48b, 48c) forming lubricant reservoirs are regularly distributed along the first axis (X1).

9. The mechanical system (1) according to one of the previous claims, wherein the pin (30) and the roller (40) are each provided with at least one recess (38, 48) forming a lubricant reservoir.

10. The mechanical system (1) according to one of the previous claims, wherein the lubricant contained in the at least one recess (38; 48; 38, 48; 138; 38a, 38b, 38c; 48a, 48b, 48c) is a grease.

11. The mechanical system (1) according to one of the previous claims, wherein the support element (10) is provided with at least one lubrication channel (18) for lubricating the interface (60) between the pin (30) and the roller (40), in particular once the lubricant contained in the at least one recess (38; 48; 38, 48; 138; 38a, 38b, 38c; 48a, 48b, 48c) is spent.

12. The mechanical system (1) according to one of the previous claims, comprising a rolling bearing, a sliding bearing or a bushing (50) positioned at the interface (60) between the pin (30) and the roller element (40).

13. An injection pump for a motor vehicle, comprising a mechanical system (1) according to one of the previous claims 1 to 12.

14. A valve actuator for a motor vehicle, comprising a mechanical system (1) according to one of the previous claims 1 to 12.

15. A method for manufacturing a mechanical system (1) according to any one of claims 1 to 12, wherein the method comprises the following steps:
a) forming at least one recess (38; 48; 38, 48; 138; 38a, 38b, 38c; 48a, 48b, 48c) in the pin (30) and/or the roller (40) ;
b) filling the recess (38; 48; 38, 48; 138; 38a, 38b, 38c; 48a, 48b, 48c) with a predetermined amount of lubricant; and
c) mounting the pin (30) and the roller (40) together with the support element (10).
